## Europäisches Patentamt

## European Patent Office

## Office européen des brevets

(11) Veröffentlichungsnummer: **0 069 276**
A2

(12) **EUROPÄISCHE PATENTANMELDUNG**

(21) Anmeldenummer: 82105502.7

(51) Int. Cl.³: **B 23 B 51/00**

(22) Anmeldetag: 23.06.82

(30) Priorität: 04.07.81 DE 3126472

(43) Veröffentlichungstag der Anmeldung:
12.01.83 Patentblatt 83/2

(84) Benannte Vertragsstaaten:
AT BE CH DE FR GB IT LI NL SE

(71) Anmelder: Hawera Probst GmbH + Co.
Schützenstrasse 77
D-7980 Ravensburg(DE)

(72) Erfinder: Müller, Norbert, Dipl.-Ing.
Segelbacherstrasse 11
D-7984 Wolpertswende(DE)

(74) Vertreter: Jackisch, Walter, Dipl.-Ing.
Menzelstrasse 40
D-7000 Stuttgart 1(DE)

(54) Bohrwerkzeug zur radialen Erweiterung einer zylindrischen Grundbohrung.

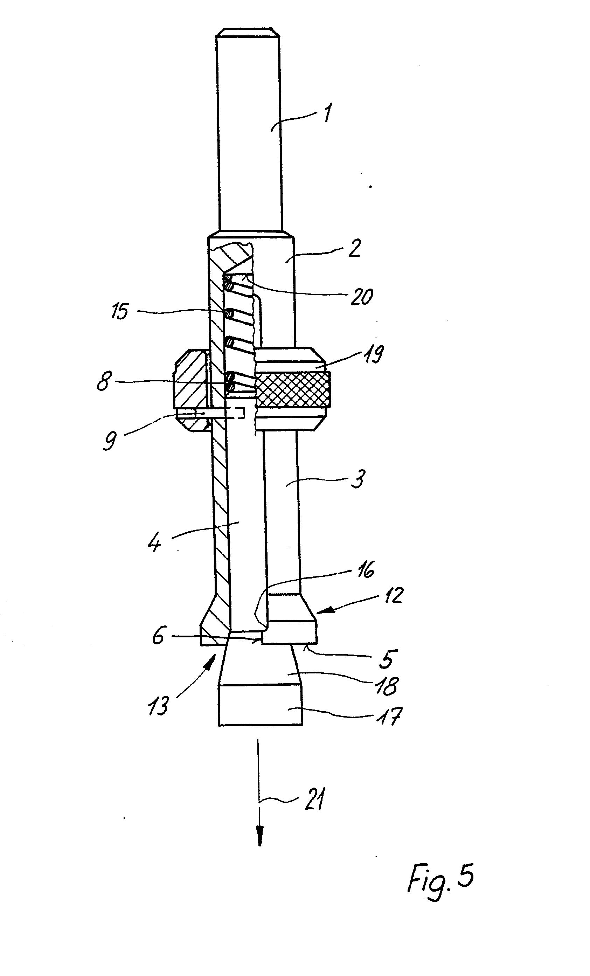

(57) Die Erfindung betrifft ein Bohrwerkzeug zur radialen Erweiterung einer zylindrischen Grundbohrung, bestehend aus einem rohrförmigen, mit einem Werkzeugschaft 1 drehfest verbundenen Werkzeugkörper 2 mit in axialer Richtung sich erstreckenden, radial federnden Segmenten 3, die zum vorderen Ende des Werkzeugs 2 offene Längsschlitze 10 begrenzen und an ihren freien Enden Schneidteile 12 tragen, wobei die Segmente 3 durch einen im Werkzeugkörper 2 axial verschiebbar geführten Aufweitdorn 13 radial verstellbar sind. Zum drehschlagenden, stirnenden Ausarbeiten einer Hinterschneidung mit hoher Vortriebsgeschwindigkeit wird erfindungsgemäß vorgeschlagen, die Schneidteile 12 mit je einer axialen, das vordere Ende des Werkzeugkörpers 2 bildenden Arbeitsfläche auszubilden, die sich in Umfangsrichtung des Werkzeugkörpers 2 erstreckt. Weiterhin liegt in Arbeitsrichtung 21 vor den Schneidteilen 12 der die Aufspreizung des Werkzeugkörpers 2 bestimmende Aufweitabschnitt 18 des Aufweitdorns 13, der in den Werkzeugkörper 2 verschiebbar ist. Der Werkzeugkörper 2 ist axial mit dem Werkzeugschaft 1 verbunden, so daß die eingeleiteten Schläge über den Werkzeugkörper 2 direkt auf die Schneidsegmente und in den Werkstoff eingeleitet werden. Das erfindungsgemäße Bohrwerkzeug ist in Fig. 5 dargestellt.

Fig. 5

Hawera Probst GmbH + Co.
Schützenstr. 77

7980 Ravensburg

## Bohrwerkzeug zur radialen Erweiterung einer zylindrischen Grundbohrung

Die Erfindung betrifft ein Bohrwerkzeug zur radialen Erweiterung einer zylindrischen Grundbohrung gemäß Oberbegriff des Anspruchs 1.

Mit derartigen Bohrwerkzeugen werden vorgefertigte Grundbohrungen mit Hinterschneidungen versehen, um einen Dübel formschlüssig in einem Werkstoff zu verankern.

Ein Bohrwerkzeug dieser Art ist aus der DE-AS 27 00 700 bekannt. Der sich am Boden der Grundbohrung abstützende Aufweitdorn hat einen vor dem Werkzeugkörper liegenden Aufweitabschnitt, der mit zwei im Werkzeugkörper radial verstellbar gelagerten Schneiden zusammenwirkt, wozu besondere Führungen vorgesehen sind. Der Werkzeugschaft wird in eine Antriebsmaschine eingespannt, die das Bohrwerkzeug rotierend antreibt. Beim Einfahren des Werkzeugkörpers in die Grundbohrung wird sich der Aufweitdorn nach Abstützung am Bohrgrund in den Werkzeugkörper verschieben und die Schneiden radial nach außen verstellen, wodurch die Erweiterung ausgearbeitet wird.

Nachteilig bei diesem Werkzeug ist, daß es sich nicht zum Einsatz in besonders hartem Gestein, insbesondere nicht in harten, inhomogenen Gefügen eignet. Die radial verstellbaren Schneiden dringen in inhomogenen Gefügen leicht in die weicheren Bestandteile ein und haken dann aufgrund ihrer Eindringtiefe an härteren Bestandteilen fest, so daß die Antriebsmaschine extrem belastet wird. Weiterhin führt das Einhaken zu Schäden an der Lagerung der Schneiden im Werkzeugkörper, so daß die radiale Verstellbarkeit der Schneiden beeinträchtigt wird und bei einem Verklemmen der Schneiden das Werkzeug sich im Bohrloch formschlüssig festsetzt. Bei extremen Belastungen werden die Schneidteile schnell stumpf oder brechen leicht ab, so daß das Werkzeug erneuert werden muß.

Ein drehschlagender Einsatz mit einer Antriebsmaschine nach dem Prinzip des Schlagbohrens ist mit dem bekannten Werkzeug nicht möglich, da die Schläge den Verstellmechanismus bzw. die Lagerung der Schneiden schädigen würden und ohnehin auf Grund der durch die Konstruktion bedingten Schlagumlenkung ein wirkungsvoller Einsatz nicht möglich ist. So muß zur Erweiterung einer Grundbohrung in hartem Gestein eine relativ große Antriebsleistung für drehendes Arbeiten vorgesehen werden, ohne daß hierdurch ein schnellerer Vortrieb erzielt werden kann.

Der Erfindung liegt die Aufgabe zu Grunde, ein Bohrwerkzeug zur radialen Erweiterung einer zylindrischen Grundbohrung zu schaffen, das drehschlagend auch in harten, inbesondere auch inhomogenen Werkstoffen einsetzbar und mit dem ein schneller Vortrieb erzielbar ist.

Die Aufgabe wird erfindungsgemäß durch die kennzeichnenden Merkmale des Anspruchs 1 gelöst. Durch die erfindungsgemäße Ausbildung des Werkzeugs kann die Hinterschneidung der Grundbohrung inbesondere drehschlagend mit der Stirnfläche der Schneidelemente ausgeführt werden, wobei der auf den Werkzeugschaft aufgebrachte Schlag über den Werkzeugkörper direkt in den zu bearbeitenden Werkstoff geleitet wird, so daß ein schneller Vortrieb gewährleistet ist. Vorteilhafterweise ist hierzu der Werkzeugkörper mit den radial spreizbaren Segmenten einstückig ausgebildet. Besonders bei inhomogenen Werkstoffen, wie z.B. armiertem Beton ist ein störungsfreies Arbeiten möglich. Die axialen Arbeitsflächen durchtrennen stirnend die Armierung, wobei ein
Verhaken nicht auftritt. Mit dem erfindungsgemäßen Bohrwerkzeug ist ein einfaches, kompaktes Werkzeug ohne anfällige Lager geschaffen, mit dem durch Austausch der
Aufweitdorne die Lage und Form der Erweiterungen frei wählbar ist. Zur Herstellung von verschiedenen Erweiterungen
kann daher fast immer derselbe Werkzeugkörper verwendet
werden, so daß ein Bereitstellen von mehreren Werkzeugkörpern entfällt.

Weitere Merkmale der Erfindung ergeben sich aus den Ansprüchen, der Beschreibung und den Zeichnungen, die ein
Ausführungsbeispiel der Erfindung wiedergeben, das nachfolgend eingehend beschrieben ist. Es zeigen:

Fig. 1                          eine Ansicht eines Werkzeugkörpers,

Fig. 2                          eine Ansicht eines Aufweitdorns,

Fig. 3                          eine Ansicht von Schneidteilen,

Fig. 4a bis 4c                  eine Ansicht eines Aufweitdorns
                                neben einem Schnitt durch eine erweiterte Grundbohrung,

Fig. 4d                         einen Schnitt durch einen Werkzeugkörper gemäß Fig. 1 mit einer dem
                                Aufweitdorn gemäß Fig. 4c angepaßten Innenkontur,

Fig. 5                      eine Ansicht eines teilweise geschnittenen Bohrwerkzeugs.

Das erfindungsgemäße Bohrwerkzeug zur radialen Erweiterung
einer zylindrischen Grundbohrung besteht aus einem mit einem
Werkzeugschaft 1 vorteilhafterweise einstückig ausgebildeten,
hülsenförmigen Werkzeugkörper 2, in dessen Mantel zum
vorderen Ende des Werkzeugkörpers 2 offene Längsschlitze 10
angeordnet sind, durch die der Mantel des Werkzeugkörpers 2
in radial federnde Segmente 3 unterteilt ist.

Neben der einteiligen Ausführung der Segmente 3 mit dem Werkzeugkörper 2 kann auch eine Ausbildung vorgesehen sein, bei
der Segmente 3 einzeln am Werkzeugschaft 1 oder an einem mit
dem Werkzeugschaft verbundenen Grundkörper (nicht dargestellt)
festgelegt werden, um so den Werkzeugkörper 2 zu bilden.

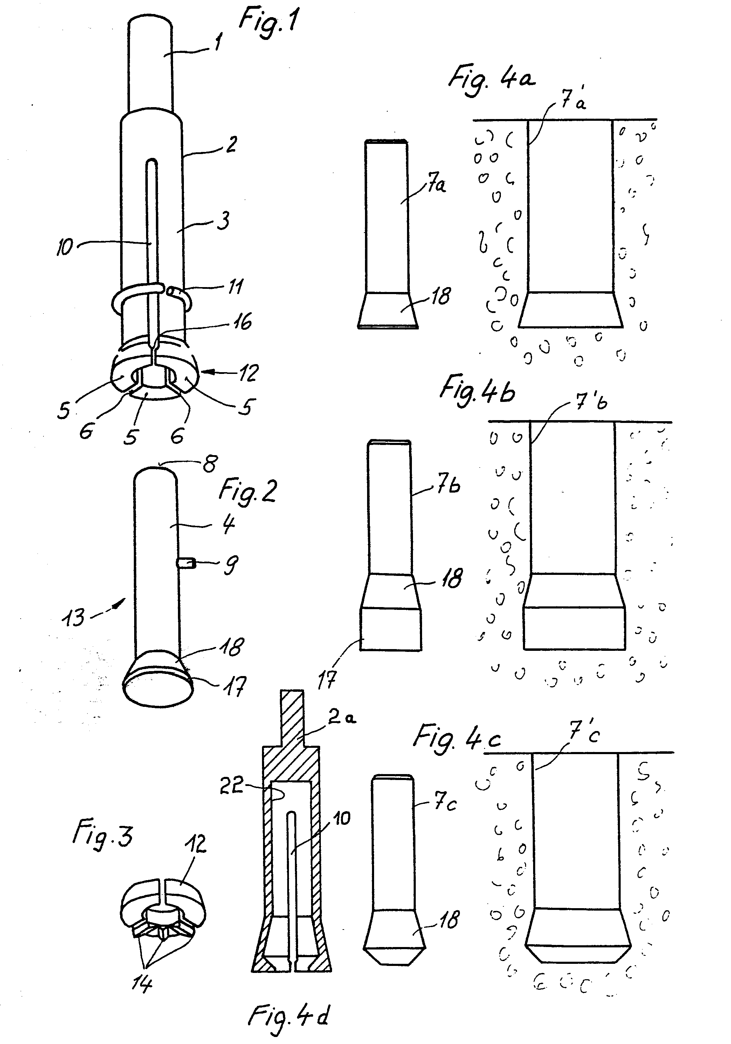

Die Segmente 3 sind aufgrund ihrer federnden Ausbildung immer
bestrebt, die in Fig. 1 gezeigte, die hülsenförmige Grundform des Werkzeugkörpers 2 bildende Ausgangsstellung einzunehmen. Die die Ausgangsstellung bestimmende Federkraft kann
vorteilhafterweise durch eine den Werkzeugkörper 2 umgreifende
Ringfeder 11 verstärkt sein.

In der gezeigten Ausführungsform besteht der Werkzeugkörper 2
aus drei federnden Segmenten 3; die Anzahl der vorzusehenden
Segmente 3 ist jedoch frei wählbar.

Am freien Ende der Segmente 3 sind Schneidelemente 12 angeordnet, die sich in Umfangsrichtung erstrecken und jeweils
das vordere Ende eines Segmentes 3 bilden. Die Schneidteile
12 weisen eine axiale Arbeitsfläche 5 mit radialen Schneidkanten 6 auf, wobei die Arbeitsfläche des Schneidteiles die stirnseitige axiale Arbeitsfläche 5 des Werkzeugkörpers 2 bildet. Die Arbeitsfläche 5 nimmt während der Aufspreizung eine leicht V-förmige
Stellung zum Aufweitdorn     ein, wodurch eine auf den Werkzeugkörper 2 aufgebrachte axiale Kraft versucht, die schräge Anstellung aufzuheben. Hierdurch werden die Segmente 3 beim Arbeitsgang, nämlich beim Bohren oder Schlagbohren, an den Aufweitdorn fest angepreßt.

Die Schneidteile 12 sind vorteilhafterweise aus Hartmetall, Keramik oder ähnlichen Werkstoffen gefertigt und auf den freien Enden der Segmente 3 aufgelötet oder aufgeklebt. Es kann auch vorteilhaft sein, die Schneidteile 12 an den freien Enden der Segmente ein- bzw. festzuklemmen, so daß die Schneidteile 12 leicht austauschbar sind.

In einer bevorzugten Ausführungsform sind die Schneidteile 12 einteilig mit den Segmenten 3 ausgebildet, so daß Verbindungsprobleme zwischen den Schneidteilen 12 und den Segmenten 3 nicht auftreten.

Vorteilhafterweise sind auf der Arbeitsfläche 5 der Schneidelemente radial ausgerichtete Schneidzähne 14 (Fig. 3) angeordnet, wodurch ein rascher Vortrieb auch in extrem harten Werkstoffen gesichert ist.

In der Ausgangsstellung (Fig. 1) der Schneidteile 12 bilden diese einen fast geschlossenen Kreisring, so daß der Werkzeugkörper auch als Bohrer zum Fertigen einer Grundbohrung in einem leichten Gestein einsetzbar ist.

Ein Aufweitdorn 13 liegt mit seinem Bolzen 4 axial verschieblich im Werkzeugkörper 2, wobei ein im Bolzen 4 festgelegter, radial abstehender Stift 9 im Längsschlitz 10 des Werkzeugkörpers 2 zu liegen kommt. Um den Aufweitdorn 13 axial unverlierbar zu halten, sind die Längsschlitze 10 an ihrem offenen Ende 16 verjüngt ausgebildet, wobei der Stift 9 vorteilhafterweise einen etwa der Breite des Längsschlitzes 10 entsprechenden Durchmesser aufweist. Durch Aufspreizen bzw.

Aufweiten des Werkzeugkörpers 2 wird das freie Ende 16 zum Austauschen eines Aufweitdorns 13 über den Durchmesser des Stiftes 9 erweitert, so daß der Aufweitdorn 13 axial entnehmbar ist. Der Bolzen 4 ragt in Ruhestellung mit einem an seinem Ende befestigten Aufweitkegel 18 aus dem Werkzeugkörper 2 heraus. Vorteilhafterweise ist der Aufweitkegel 18 durch einen Führungszylinder 17 verlängert, der im wesentlichen dem Durchmesser der bereits eingebrachten Grundbohrung entspricht, so daß der Werkzeugkörper in der Grundbohrung sicher zentriert und das Bohrwerkzeug bohrlochgenau in Arbeitsstellung geführt werden kann.

Der Führungszylinder 17 weist vorteilhafterweise eine derartige Länge auf, daß er bei maximal eingefahrenem Aufweitdorn 13 noch aus dem Werkzeugkörper 2 herausragt, um so auch nach dem Aufspreizen des Werkzeugkörpers noch eine einwandfreie Zentrierung sicherzustellen.

Die maximale Spreizstellung des Werkzeugkörpers 2 ist vorteilhafterweise durch einen Anschlag 8 begrenzt, der durch das im Werkzeugkörper liegende Ende des Bolzens 4 gebildet ist. Der Anschlag 8 gelangt in Anlage am Boden 20 des Werkzeugkörpers 2 und begrenzt so den axialen Verschiebeweg des Aufweitdorns 13 (Fig. 5).

Die Form des Aufweitkegels 18 bestimmt die Endform der aufzuweitenden Grundbohrung bzw. die vorgesehene Hinterschneidung. Wie in Fig. 4a bis 4c dargestellt, entspricht die Außenkontur 7a, 7b, 7c des Aufweitdorns 13 dem Schnitt durch die aufgeweitete Grundbohrung 7'a, 7'b, 7'c. Bei einer vorgesehenen Außenkontur 7c gemäß Fig. 4c ist die Innenkontur 22 des Werkzeugkörpers 2a der Außenkontur 7c angepaßt. Bei dieser Ausbildung werden die Schneidteile 12 bei Erreichen des Bohrlochgrundes 23 auf den ursprünglichen Durchmesser gemäß der Ausgangsstellung zurückgehen, so daß das Werkzeug aus dem Bohrloch nach Beendigung des Arbeitsganges sofort wieder zurückgezogen werden kann. Zum Ausfahren des versenkten Aufweitdorns 13 aus dem Werkzeugkörper ist ein Ring 19 gemäß Fig. 5 vorgesehen, der über einen Stift 9 mit dem Aufweitdorn 13 formschlüssig verbunden ist.

Das komplett montierte Werkzeug ist in Fig. 5 dargestellt. Der Werkzeugschaft 1 wird mit einem drehschlagenden Antrieb gekoppelt und der Führungszylinder 17 in das nicht näher dargestellte, vorgefertigte Bohrloch eingesetzt. Die axiale Stirnfläche, die gemäß Fig. 3 vorteilhafterweise mit Schneidzähnen 14 bestückt ist, dringt drehend oder drehschlagend in den Werkstoff ein. Gelangt der Führungszylinder 17 am Grund der Bohrung zur Anlage, so werden die Segmente 3 beim Aufgleiten auf den Aufweitkegel 18 radial nach außen gespreizt, so daß die Arbeitsfläche 5 mit den Schneidkanten 6 und den Schneidzähnen 14 drehend oder drehschlagend stirnend eine dem Aufweitkegel 18 entsprechende Hinterschneidung fertigt.

Beim Zurücknehmen des Bohrwerkzeuges wird der Aufweitdorn 13 aufgrund der Federwirkung der Segmente 3 und ggf. eines angeordneten Federringes 11 eine axiale, in Arbeitsrichtung 21 gerichtete Kraft erfahren, die den Aufweitdorn 17 wieder in seine Ausgangsstellung aus dem Werkzeugkörper 2 austreten läßt und der Werkzeugkörper 2 seine rohrförmige Grundform wieder einnimmt. Die Schneidteile bilden nun wieder einen fast vollständigen Kreisring. Bei Ausführung des Aufweitdorns 13 mit einer Außenkontur 7a bzw. 7b gemäß Fig. 4a bzw. Fig. 4b kann der Aufweitdorn ohne mechanische Hilfe bereits durch die Hammerschläge der Antriebsmaschine, z. B. eines Bohrhammers, auf das Werkzeugende 1 bei zurückgenommenem Anpreßdruck auf die Schneidteile 12 in seine Ausgangsstellung zurückkehren. Vorteilhafterweise ist der Bolzen 4 durch eine Feder 15 in seiner Ausgangsstellung kraftbeaufschlagt, wodurch ein sicheres Rückfahren gewährleistet ist. Die Feder 15 liegt vorteilhafterweise zwischen dem Anschlag 8 und dem Boden 20 im Werkzeugkörper 2 (Fig. 5).

Zur manuellen Rücknahme des Aufweitdorns 13 ist vorteilhafterweise ein auf dem Außenumfang des Werkzeugkörpers 2 axial
verschiebbarer Ring 19 aus Metall oder Kunststoff vorgesehen,
in den der verlängerte Stift 9 des Bolzens 4 formschlüssig
eingreift. Der Ring 19 liegt mit radialem Spiel 24 auf dem
Werkzeugkörper, so daß sich das Werkzeug aufspreizen kann, ohne
daß der Ring dieses verhindert oder der Ring verklemmt. Die
Lage des Rings 19 ist durch den formschlüssig eingreifenden
Stift 9 bestimmt.

Das erfindungsgemäße Bohrwerkzeug besteht nur aus wenigen
Teilen und ist einfach und kompakt aufgebaut. Es ist kostengünstig und gewährleistet eine hohe Standzeit.

Ein wesentlicher Vorteil der Erfindung ist dadurch gegeben, daß
das Werkzeug zur Bearbeitung von harten, inhomogenen Werkstoffen
wie Beton drehschlagend eingesetzt werden kann, da die flächig
arbeitenden Schneidteile 12 nicht einhaken können. Das erfindungsgemäße Werkzeug arbeitet weitgehend störungsfrei, da das bei
einschneidigen Werkzeugen auftretende Einhaken der Schneiden
bei einem Wechsel von Bindemittel zu einzelnen, harten Zuschlagstoffen vermieden ist.

Weiterhin ist das erfindungsgemäße Werkzeug auch im armierten
Beton einsetzbar. Zur Ausarbeitung einer Hinterschneidung wird
eine dem maximalen Außendurchmesser des Aufweitdorns 13 entsprechende Bohrung gearbeitet, in die der Kopf des Aufweitdorns
eingesetzt wird. Die Schneidteile des erfindungsgemäßen Werkzeuges arbeiten axial gegen den Beton, wobei die Schneidteile
12 stirnend die in ihrem Umfeld auftretenden Armierungen durchtrennen.

Hawera Probst GmbH + Co.
Schützenstr. 77
7980 Ravensburg


.Ansprüche

1. Bohrwerkzeug zur radialen Erweiterung einer zylindrischen Grundbohrung, bestehend aus einem rohrförmigen
   Werkzeugkörper mit einem zum Einspannen in eine Antriebsmaschine vorgesehenen Werkzeugschaft und einem
   am Boden der Grundbohrung sich abstützenden, im Werkzeugkörper geführten Aufweitdorn, der beim Eindringen
   in den Werkzeugkörper zur Ausarbeitung der Erweiterung
   vorgesehene Schneidteile radial verstellt, dadurch gekennzeichnet, daß der Werkzeugkörper (2) aus in axialer
   Richtung sich erstreckenden, radial federnden Segmenten
   (3) gebildet ist, die zum vorderen Ende des Werkzeuges
   (1 mit 2) offene Längsschlitze (10) begrenzen und an
   ihren freien Enden Schneidteile (12) mit je einer
   axialen, in Umfangsrichtung des Werkzeugkörpers (2)
   sich erstreckenden Arbeitsfläche (5) angeordnet sind,
   wobei die in Umfangsrichtung benachbarten Arbeitsflächen
   (5) die vordere Stirnseite des Werkzeugkörpers (2)
   bilden und die Schneidteile (12) im Ausgangszustand
   des Werkzeugkörpers (2) einen weitgehend vollständigen
   Kreisring bilden.


2. Bohrwerkzeug nach Anspruch 1, dadurch  gekennzeichnet,
   daß der Werkzeugkörper (2) mit den radial spreizbaren
   Segmenten (3) einstückig ausgebildet  ist.


- 2 -

3. Bohrwerkzeug nach Anspruch 1 oder 2, dadurch gekennzeichnet, daß die Schneidteile (12) aus Hartmetall, Keramik oder ähnlichen Werkstoffen bestehen und auf den freien Enden der Segmente (3) aufgelötet bzw. aufgeklebt sind.

4. Bohrwerkzeug nach einem der Ansprüche 1 bis 3, dadurch gekennzeichnet, daß die Schneidteile (12) an den freien Enden der Segmente (3) eingeklemmt befestigt sind.

5. Bohrwerkzeug nach einem der Ansprüche 1 bis 3, dadurch gekennzeichnet, daß die Schneidteile (12) einstückig mit den Segmenten (3) ausgebildet sind.

6. Bohrwerkzeug nach einem der Ansprüche 1 bis 5, dadurch gekennzeichnet, daß die Außenkontur (7a, 7b, 7c) des Aufweitdorns (13) der Endform des zu fertigenden Bohrloches (7'a, 7'b, 7'c) entspricht, wobei die Innenkontur (22) des Werkzeugkörpers (2a) vorzugsweise der Außenkontur (7c) des Aufweitdorns (13) angepaßt ist.

7. Bohrwerkzeug nach einem der Ansprüche 1 bis 6, dadurch gekennzeichnet, daß der Aufweitdorn (13) einen am Werkzeugkörper (2) anlegbaren, den Aufweitvorgang begrenzenden Anschlag (8) aufweist und durch eine Feder (15) in seiner Ausgangsstellung kraftbeaufschlagt ist.

8. Bohrwerkzeug nach einem der Ansprüche 1 bis 7, dadurch gekennzeichnet, daß an den Aufweitabschnitt (18) in Arbeitsrichtung (21) ein Führungszylinder (17) anschließt.

9. Bohrwerkzeug nach Anspruch 7 und 8, dadurch gekennzeichnet, daß der Führungsabschnitt (17) eine derartige Länge aufweist, daß er bei am Anschlag (8) anliegendem Aufweitdorn (13) aus dem Werkzeugkörper (2) herausragt.

10. Bohrwerkzeug nach einem der Ansprüche 1 bis 9, dadurch gekennzeichnet, daß im Bolzen (4) ein an die Breite des Längsschlitzes (10) angepaßter Stift (9) radial vorstehend befestigt ist, der in einem auf dem Werkzeugkörper (2) axial verschiebbar gelagerten Ring (19) formschlüssig gehalten ist, wobei die Längsschlitze (10) am offenen Ende (16) vorzugsweise verjüngt ausgebildet sind.

Fig.1

Fig. 4a

Fig.2

Fig.4b

Fig.3

Fig.4c

Fig.4d

0069276

Fig. 5